# EUROPÄISCHE PATENTANMELDUNG

(11) **EP 3 557 837 A1**
(43) Veröffentlichungstag der Anmeldung: **23.10.2019**
(21) Anmeldenummer: 18167702.2
(22) Anmeldetag: 17.04.2018
(51) Int. Cl.: H04L 29/06, H04L 12/24

(54) **BEREITSTELLUNG VON SICHERHEITSKONFIGURATIONSDATEN EINER ZUGANGSVERBINDUNG**

(71) Anmelder: Siemens Aktiengesellschaft, 80333 München (DE)
(72) Erfinder: Falk, Rainer, 85586 Poing (DE); Fries, Steffen, 85598 Baldham (DE); Heintel, Markus, 81377 München (DE); Walewski, Joachim, 82008 Unterhaching (DE)

(57) **Zusammenfassung**

Verfahren zur Bereitstellung von Sicherheitskonfigurationsdaten einer Zugangsverbindung, die über ein Zugangsnetzwerk (20) zwischen einem ersten Netzwerk (10) und einem Dienstserver (41, 42) eingerichtet ist, wobei eine Sicherheitsdatenstruktur (50) bereitgestellt wird, die eine aktuell verwendete Sicherheitskonfiguration der Zugangsverbindung (60) umfasst und die Sicherheitskonfiguration kryptographisch geschützt bestätigt und
abhängig von der Sicherheitsdatenstruktur (50) eine Maßnahme im ersten Netzwerk (10) und/oder im Dienstserver (41, 42) veranlasst wird.

## Beschreibung

Die Erfindung betrifft ein Verfahren und eine Sicherheitsdatenstruktur zur Bereitstellung von Sicherheitskonfigurationsdaten einer Zugangsverbindung, die innerhalb eines Zugangsnetzwerks zwischen einem ersten Netzwerk und einem Dienstserver eingerichtet ist.

Eine Datenübertragung eines industriellen Automatisierungssystems, beispielsweise zur Steuerung eines Feldgeräts durch eine Steuerungseinheit oder zur Überwachung des Automatisierungssystems durch einen Überwachungsserver oder zur Projektierung von Systemkomponenten durch einen Projektierungsserver, muss gegen Angriffe geschützt werden. Dazu kann die Datenübertragung zum Beispiel mittels eines Transportschicht-Sicherheitsprotokolls TLS oder auch durch ein sicheres Internetprotokoll IPsec oder eine Schicht 2-Sicherheitsprotokoll wie MACsec geschützt werden.

Zur Datenübertragung können unterschiedliche, insbesondere drahtlose Übertragungstechnologien, wie beispielsweise Bluetooth, ZigBee, WLAN, WiMAX oder auch gemäß Mobilfunkstandards wie UMTS (Universal Mobile Telecommunication System), LTE (Long Term Evolution) oder einem künftigen 5G (Fifth Generation), verwendet werden.

Eine Absicherung der Datenübertragung kann grundsätzlich unabhängig von der Übertragungstechnologie realisiert werden. Dabei kommt es jedoch üblicherweise zu einer doppelten Verschlüsselung. Einerseits verschlüsselt ein Anwendungsprogramm seine Kommunikation, beispielsweise zwischen einem Automatisierungsgerät und einem Dienstserver, auf einer Anwendungsschicht (Schicht 7) entsprechend einem von ITU (International Telecommunication Union) und ISO (International Standard Organization) standardisierten OSI-Referenzmodells für Netzwerkprotokolle. Andererseits verschlüsselt das Übertragungsnetzwerk die Kommunikationsverbindung durch Sicherheitsmaßnahmen auf Schicht 2 bis Schicht 4 des OSI-Referenzmodells. Insbesondere bei Batterie-betriebenen Geräten, bei Geräten mit eigener Energieerzeugung, die beispielsweise mit Photovoltaik-Zellen ausgestattet sind, sowie bei Geräten mit Echtzeitanwendungen ist dies jedoch nachteilig, da dabei der Energieverbrauch erhöht und verlängerte Bearbeitungszeiten, die eine Echtzeiteigenschaft der Anwendung verschlechtert, entstehen. Unter Verschlüsselung einer Datenübertragung ist allgemein ein kryptographischer Schutz der Datenübertragung zu verstehen. Dieser kann die Vertraulichkeit und/oder die Integrität der übertragenen Daten und/oder die Authentizität eines oder mehrerer Kommunikationspartner schützen.

Auch lassen sich durch solche doppelten Sicherheitslösungen, die häufig auch als "Over-the-Top-Security" bezeichnet werden, alleine nicht alle Sicherheitsziele erreichen. So lässt sich beispielsweise ein Manipulationsschutz von Mobilfunk-Signalisierungsnachrichten gegen Denial of Service-Angriffe durch solche doppelten Sicherheitslösungen nicht realisieren. Dies betrifft insbesondere künftige Mobilfunknetze, beispielsweise gemäß dem 5G-Standard, die als Zugangsnetzwerk Kommunikationsverbindungen zwischen Geräten in einem Datennetzwerk und Dienstservern, die nahe dem Datennetzwerk oder in einer abgesetzten gemeinschaftlich genutzten Dienstserver-Domäne (Edge-Cloud-Kommunikation) angeordnet sind, bereitstellen. Die Geräte kommunizieren dabei eigenständig ohne das Zutun eines menschlichen Nutzers mit anderen Geräten und Dienstservern.

Es ist somit die Aufgabe der vorliegenden Erfindung, einem Gerät in einem Datennetz Möglichkeiten bereitzustellen, eine mehrfache Absicherung von Kommunikationsverbindungen zu Dienstservern, die über ein Zugangsnetzwerk mit dem Datennetz oder dem Gerät selbst verbunden sind, zu vermeiden.

Diese Aufgabe wird durch die in den unabhängigen Ansprüchen beschriebenen Maßnahmen gelöst. In den Unteransprüchen sind vorteilhafte Weiterbildungen der Erfindung dargestellt.

Gemäß eines ersten Aspektes betrifft die Erfindung ein Verfahren zur Bereitstellung von Sicherheitskonfigurationsdaten einer Zugangsverbindung, die durch ein Zugangsnetzwerk zwischen einem ersten Netzwerk und einem Dienstserver eingerichtet ist, wobei eine Sicherheitsdatenstruktur bereitgestellt wird, die eine aktuell verwendete Sicherheitskonfiguration der Zugangsverbindung umfasst und die Sicherheitskonfiguration kryptographisch geschützt bestätigt und abhängig von der Sicherheitsdatenstruktur eine Maßnahme im ersten Netz und/oder im Dienstserver veranlasst wird. Die Bestätigung der Sicherheitskonfigurationsdaten kann sich auf die gesamte Zugangsverbindung oder auf einen oder mehrere Teilabschnitte der Zugangsverbindung beziehen, z.B. um einen Teilabschnitt zwischen einer ersten Zugangsvorrichtung, z.B. ein Mobilfunkmodem, und einer zweiten Zugangsvorrichtung, z.B. einer Basisstation.

Dies hat den Vorteil, dass durch die kryptographisch geschützte Bestätigung die aktuelle Sicherheitskonfiguration einer Zugangsverbindung sowohl in einem ersten Netz als auch in einem Dienstserver dazu verwendet werden kann, weitere Sicherheitsmaßnahmen lediglich dann bereitzustellen, wenn dies nach Prüfung der aktuellen Sicherheitskonfigurationsdaten der Zugangsverbindung notwendig erscheint. Ein erstes Netzwerk, wie beispielsweise eine Automatisierungsanlage, kann damit abhängig von der tatsächlichen Sicherheitskonfiguration des Zugangsnetzes reagieren und beispielsweise eine Kommunikationsverbindung blockieren oder Steuerungsfunktionalität einschränken. Das erste Netzwerk kann ein oder mehrere Netzwerkgeräte umfassen. Das Netzwerkgerät kann z.B. eine Maschine, z.B. eine Werkzeugmaschine oder ein Roboter oder ein autonomes Fahrzeug, oder ein Internet-of-Things-Gerät sein. Ein Netzwerkgerät kann mehrere Komponenten umfassen, z.B. eine Steuereinheit und ein Kommunikationsmodul.

In einer vorteilhaften Ausführungsform wird die Sicherheitsdatenstruktur von einer ersten Zugangsvorrichtung im ersten Netzwerk erstellt.

Dies ermöglicht es dem ersten Netzwerk unabhängig vom Zugangsnetzwerk, die Sicherheitskonfiguration, insbesondere auf der Funkübertragungsstrecke, zu überwachen und Maßnahmen zu ergreifen.

In einer vorteilhaften Ausführungsform wird die Sicherheitsdatenstruktur an eine Übergangsvorrichtung im ersten Netz ermittelt und abhängig von der Sicherheitsdatenstruktur ein Aufbau einer Zugangsverbindung durchgeführt.

Eine Übergangsvorrichtung im ersten Netzwerk kann beispielsweise ein Datengateway, eine Firewall oder auch eine Vorrichtung zum Aufbau eines virtuellen privaten Netzwerkes sein. Abhängig von der aktuellen Sicherheitskonfiguration kann die Übergangsvorrichtung beispielsweise einen virtuellen privaten Netzwerk VPN-Tunnel aufbauen.

In einer vorteilhaften Ausführungsform wird die Sicherheitsdatenstruktur einem Gerät, insbesondere einer Komponente oder Anwendung auf dem Gerät, im ersten Netzwerk zur Auswertung übermittelt und abhängig von der Auswertung der Sicherheitsdatenstruktur eine Anpassung mindestens einer Funktion des Gerätes durchgeführt.

So kann beispielsweise ein Gerät auf einen autonomen Betriebsmodus zurückfallen, wenn die Sicherheitsdatenstruktur eine zu geringe Sicherheit der Verbindung durch das Zugangsnetzwerk anzeigt.

In einer vorteilhaften Ausführungsform wird die Sicherheitsdatenstruktur zur Auswertung an einen Dienstserver übermittelt. Die Sicherheitsdatenstruktur ist vorzugsweise durch eine kryptographische Prüfsumme geschützt z.B. digitale Signatur, Nachrichtenauthentisierungscode).

So kann vorteilhafter Weise auch ein vom Zugangsnetzwerk unabhängiger Dienstserver auf eine beispielsweise schlechte Sicherheit der Zugangsverbindung reagieren.

In einer vorteilhaften Ausführungsform wird die Sicherheitsdatenstruktur von einer zweiten Zugangsvorrichtung, die dem Zugangsnetzwerk angehört, erstellt und zur Auswertung an einen Dienstserver übermittelt.

Dies hat den Vorteil, dass abhängig von der aktuellen Sicherheitsdatenstruktur eine Steuerungsfunktion durch einen Dienstserver, der beispielsweise nahe dem ersten Netzwerk angeordnet ist, gesperrt wird.

In einer vorteilhaften Ausführungsform wird die Sicherheitsdatenstruktur von einer Netzvorrichtung innerhalb des Zugangsnetzes erstellt und zur Auswertung an einen Dienstserver übermittelt.

Dadurch wird bestätigt, ob Nutzdaten in dem Zugangsnetzwerk verschlüsselt bzw. kryptographisch geschützt übertragen werden. Eine Netzvorrichtung, beispielsweise eine Network-Domain-Security NDS, innerhalb des Zugangsnetzes stellt dabei einen Dienstserver beispielsweise in einer vom Zugangsnetz getrennten Dienstdomäne eine entsprechende Information bereit.

In einer vorteilhaften Ausführungsform wird die Sicherheitsdatenstruktur gegenüber einer Sicherheitsrichtlinie überprüft, die eine Mindestanforderung des ersten Netzwerks zur Verschlüsselung der Zugangsverbindung vorgibt.

Durch die Sicherheitsrichtlinie wird vorgegeben, welche Mindestanforderungen an die Verschlüsselung, beispielsweise bezüglich einer verwendeten Cipher Suite, einer authentifizierten Verschlüsselung, einem auf Integrität beschränkten Sicherheitsmodus, einer Schlüssellänge, einer maximalen Schlüsselgültigkeitsdauer usw. vorliegen. Die Sicherheitsrichtlinien umfasst zu jeder Mindestanforderung mindestens eine Maßnahme, die abhängig von den Angaben in der Sicherheitsdatenstruktur selbst und/oder abhängig von einem aus der Sicherheitsdatenstruktur abgeleiteten Schaltsignal, auszuführen sind. Ein solches Schaltsignal kann beispielsweise von einer Übergangsvorrichtung ausgewertet werden. Abhängig von dieser Auswertung kann ein VPN-Tunnel aufgebaut werden, in dem die Datenkommunikation zusätzlich gesichert über das Zugangsnetz übertragen wird.

In einer vorteilhaften Ausführungsform wird eine Maßnahme im ersten Netzwerk und/oder im Dienstserver abhängig von einem einzelnen Sicherheitsparameter oder einer Kombination mehrerer Sicherheitsparameter der Sicherheitsdatenstruktur veranlasst.

In einer vorteilhaften Ausführungsform wird eine Auswertung der Sicherheitsdatenstruktur bei einem Aufbau einer Zugangsverbindung, bei einer Übergabe einer Zugangsverbindung zwischen zwei unterschiedlichen zweiten Zugangsvorrichtungen, das heißt bei einem Handover, bei einer Übergabe einer Zugangsverbindung zwischen zwei unterschiedlichen ersten Zugangsverbindung, z.B. bei redundanten Zugangsvorrichtungen des ersten Netzwerks, in zeitlich vorbestimmten Abständen, oder basierend auf Änderungen in der Sicherheitsinformation in einer ersten Zugangsvorrichtung des ersten Netzwerks oder in einer zweiten Zugangsvorrichtung des Zugangsnetzwerkes durchgeführt.

Dies ermöglicht es insbesondere nach Aktionen, die eine Änderung der Sicherheitskonfiguration auslösen können, diese Änderung kurzfristig zu identifizieren und durch eine aktualisierte Sicherheitsdatenstruktur diese Information weiterleiten zu können. Somit ist eine kurzfristige Reaktion auf geänderte Sicherheitssituationen möglich.

In einer vorteilhaften Ausführungsform ist das erste Netzwerk ein Internet of Things, insbesondere ein Datennetzwerk einer Industrieanlage, in dem Gerät eigenständig über das erste Netzwerk miteinander kommunizieren. Es kann sich bei dem ersten Netzwerk auch um ein einzelnes Internet-of-Things-Gerät handeln, insbesondere um einen Sensor, einen Aktuator um eine Steuereinheit einer Industrieanlage, oder um eine Maschine, z.B. eine Werkzeugmaschine, ein Roboter, ein führerloses Transportsystem, ein autonomes Fahrzeug.

Durch die Sicherheitsdatenstruktur kann insbesondere in solchen Internet of Things Netzwerken eine automatische Anpassung entweder der Geräte selbst, der Zugangsnetzverbindung oder auch der über die Dienstserver angebotenen Dienste reagiert werden.

In einer vorteilhaften Ausführungsform ist das Zugangsnetzwerk ein Mobilfunknetzwerk gemäß eines GSM-, UMTS-, LTE- oder 5G-Standards des 3G-Partnerschaftsprojects.

Ein zweiter Aspekt der Erfindung betrifft eine Sicherheitsdatenstruktur zur Bereitstellung von Sicherheitskonfigurationsdaten einer Zugangsverbindung, die innerhalb eines Zugangsnetzwerks zwischen einem ersten Netzwerk und einem Dienstserver eingerichtet ist, umfassend mindestens einen Sicherheitsparameter einer aktuell verwendeten Sicherheitskonfiguration einer Zugangsverbindung, und ein kryptographisches Bestätigungselement, das abhängig von dem mindestens einen Sicherheitsparameter ermittelt ist.

In vorteilhafter Weise umfasst die Sicherheitsdatenstruktur alle wichtigen Sicherheitsparameter und ermöglicht durch das kryptographische Bestätigungselement, beispielsweise eine kryptographische Prüfsumme oder eine digitale Signatur, eine Überprüfung der Integrität der Sicherheitsparameter. Des Weiteren kann auch beispielsweise durch die Verwendung eines privaten Schlüssels zur Erstellung der Signatur die Authentizität des Senders der Sicherheitsdatenstruktur durch beispielsweise die erste Zugangsvorrichtung zum ersten Netzwerk oder die zweite Zugangsvorrichtung zum Zugangsnetzwerk überprüft werden.

In einer vorteilhaften Ausführungsform enthält der mindestens eine Sicherheitsparameter eine Sicherheitsinformation zu einer Verbindung innerhalb des Zugangsnetzwerks.

Solche Sicherheitsparameter sind beispielsweise die Netzwerkzugangstechnologie, Sicherheitsoptionen, eine verwendete Cipher Suite, ein verwendetes Authentisierungs- und Schlüsselvereinbarungsprotokoll etc.

In einer vorteilhaften Ausführungsform ist die Sicherheitsdatenstruktur in Form einer erweiterbaren Auszeichnungssprache XML oder in Form einer JAVA Script Object Notation JSON codiert.

Ein dritter Aspekt der Erfindung betrifft ein System zur Bereitstellung von Sicherheitskonfigurationsdaten einer Zugangsverbindung, die innerhalb eines Zugangsnetzwerks insbesondere eines Mobilfunknetzwerks, zwischen einem ersten Netzwerk und einem Dienstserver eingerichtet ist, umfassend ein erstes Netzwerk, ein Zugangsnetzwerks und mindestens einen Dienstserver, wobei das erste Netzwerk und/oder das Zugangsnetzwerk derart ausgebildet sind eine Sicherheitsdatenstruktur bereitzustellen, die eine aktuell verwendete Sicherheitskonfiguration der Zugangsverbindung umfasst und die Sicherheitskonfiguration kryptographisch geschützt bestätigt und abhängig von der Sicherheitsdatenstruktur eine Maßnahme im ersten Netzwerk und/oder im Dienstserver zu veranlassen.

Ein vierter Aspekt der Erfindung betrifft ein Computerprogrammprodukt, das direkt in einen Speicher mindestens eines digitalen Computers ladbar ist, umfassend Programmcodeteile, die dazu geeignet sind, die Schritte des Verfahrens nach einem der Ansprüche 1 bis 13 durchzuführen.

Ausführungsbeispiel des erfindungsgemäßen Verfahrens und der erfindungsgemäßen Sicherheitsdatenstruktur sind in den Zeichnungen beispielhaft dargestellt und werden anhand der nachfolgenden Beschreibung näher erläutert.

Es zeigen:
- Figur 1: ein erstes Ausführungsbeispiel eines erfindungsgemäßen Systems und des erfindungsgemäßen Verfahrens, in dem eine Sicherheitsdatenstruktur von einer ersten Zugangsvorrichtung im ersten Netzwerk erstellt wird, in schematischer Darstellung;
- Figur 2: ein zweites Ausführungsbeispiel eines erfindungsgemäßen Systems und eines erfindungsgemäßen Verfahrens, bei dem eine Sicherheitsdatenstruktur von einer zweiten Zugangsvorrichtung im Zugangsnetzwerk erstellt wird, in schematischer Darstellung;
- Figur 3: ein drittes Ausführungsbeispiel eines erfindungsgemäßen Systems und Verfahrens, in dem die Sicherheitsdatenstruktur von einer Netzvorrichtung innerhalb des Zugangsnetzes erstellt wird, in schematischer Darstellung; und
- Figur 4: ein Ausführungsbeispiel einer erfindungsgemäßen Sicherheitsdatenstruktur in schematischer Darstellung.

Einander entsprechende Teile sind in allen Figuren mit den gleichen Bezugszeichen versehen.

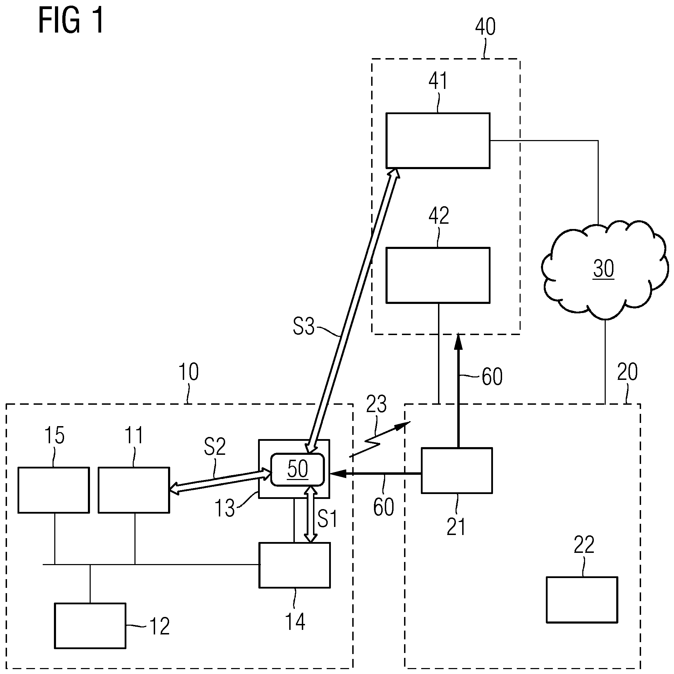

Figur 1 zeigt ein System, insbesondere ein Kommunikationssystem, in dem Daten zwischen einem ersten Netzwerk 10 über ein Zugangsnetzwerk 20 an eine Dienstdomäne 40 mit Dienstservern 41, 42 ausgetauscht werden. Das erste Netzwerk 10 kann insbesondere ein Automatisierungsnetz, ein Stromverteilungsnetz oder ein Sicherungsnetz im Verkehrsbereich sein. Geräte 11, 12 im ersten Netzwerk 10, beispielsweise Feldgeräte oder intelligente Messgeräte eines Stromverteilernetzes, ermitteln und senden Daten beispielsweise über eine Übergangsvorrichtung 14 und eine erste Zugangsvorrichtung 13 an einen Dienstserver 40, 41 zur Auswertung, Überwachung, Diagnose oder auch zur ihrer Steuerung. Eine Steuereinheit 15 kann auch innerhalb des ersten Netzwerks 10, beispielsweise für eine lokale Steuerung von Geräten, angeordnet sein. Die Kommunikationsverbindung zwischen dem ersten Netzwerk 10 und einem Dienstserver 41, 42 wird über ein Zugangsnetz 20 übertragen, das als drahtgebundenes und bevorzugt als drahtloses Netzwerk ausgebildet ist. Das Zugangsnetzwerk 20 ist insbesondere als ein Mobilfunknetz der zweiten Generation, auch GSM-Netz genannt, der dritten Generation, auch Universal Mobile Telephone Communication System, UMTS genannt, einem 4G-Netz, auch als Long Term Evolution LTE-Netz bezeichnet, über ein 5G-Netzwerk, das eine Weiterbildung der 4G-Netzes ist, oder ein WLAN-Netzwerk oder WiMAX-Netzwerk ausgebildet. Insbesondere ein Zugangsnetzwerk gemäß einem 5G-Standard unterstützt eine hohe Übertragungsbandbreite und ermöglicht eine Echtzeitkommunikation zwischen einer angeschlossenen Sende- und Empfangseinheit, hier ein Gerät 11, 12 und einem Dienstserver 41, 42.

Die Übergangsvorrichtung 14 überwacht die Daten vor einer Übertragung in ein anderes Netzwerk, um beispielsweise Sicherheitsmaßnahmen durchzuführen. Die Übergangsvorrichtung 14 kann beispielsweise eine Übergangs-Gateway oder eine VPN-Vorrichtung sein.

Die erste Zugangsvorrichtung 13 ist derart ausgebildet, den Datenverkehr beispielsweise zur Übertragung auf einer Funkschnittstelle des Zugangsnetzes 20 umzusetzen. Beispielsweise wird eine Sicherheitskonfiguration für eine Verbindung mit dem Zugangsnetz und insbesondere in der zweiten Zugangsvorrichtung 21 des zweiten Netzwerks 20 ausgehandelt und für die Funkverbindung 23 angewendet.

Die zweite Zugangsvorrichtung 21 im Zugangsnetz 20 stellt eine Funkschnittstelle zum ersten Netzwerk 10 bereit und leitet die vom Netzwerk 10 empfangenen Daten über beispielsweise weitere Komponenten 22 des Zugangsnetzes an die Dienstdomäne 40 weiter. Solche weiteren Netzwerkkomponenten 22 können beispielsweise Register- oder Steuerungskomponenten wie beispielsweise Heimatregister oder Besucherregister und Steuerungsfunktionen sein, die eine Mobilitätsverwaltung oder Dienstverwaltung innerhalb des Zugangsnetzwerkes 20 steuern. Das Zugangsnetzwerk 20 ist beispielsweise über ein weiteres öffentliches Netzwerk 30, beispielsweise einem öffentlichen Internet, mit der Dienstdomäne 40 verbunden. In der Dienstdomäne 40 ist ein abgesetzter Dienstserver 41 über das öffentliche Netzwerk 30 mit dem Zugangsnetz 20 verbunden. Ein Dienstserver 42, auch als Edge-Server bezeichnet, ist direkt mit dem Zugangsnetz 20 verbunden und steuert besonders echtzeitkritische Dienste im ersten Netz 10. Die erste Zugangsvorrichtung 13 im ersten Netzwerk wird häufig als Modem oder zelluläres Modem bezeichnet, das den Übergang insbesondere zu einem zellulären Mobilfunknetz als Zugangsnetz 20 bereitstellt.

Geräte 11, 12 im ersten Netzwerk 10 sind insbesondere batteriebetriebene Geräte und/oder Geräte, die selbst Energie, beispielsweise über Photovoltaik-Anordnung, sammeln. Die Geräte 11, 12 müssen energiesparend betrieben werden, insbesondere wenn sie über einen langen Zeitraum betrieben werden oder abgelegen oder schwer zugänglich angeordnet sind. Um einen mehrfache Schutz von Datenverbindungen, insbesondere zwischen einem Gerät 11, 12 und einem Dienstserver 42 zu vermeiden, stellt das erste Netzwerk 10 und hier insbesondere die erste Zugangsvorrichtung 13, eine Sicherheitsdatenstruktur 50 bereit, die eine aktuell verwendete Sicherheitskonfiguration der Zugangsverbindung 60, insbesondere der Funkverbindung 23 zwischen dem ersten Netz 10 und dem Zugangsnetz 20 enthält. Die Sicherheitskonfiguration umfasst ein kryptographisches Bestätigungselement, das abhängig von den Sicherheitskonfigurationsdaten in der Sicherheitsdatenstruktur 50 gebildet ist. Die Sicherheitsdatenstruktur 50 bildet somit eine bestätigte Sicherheitsinformation der aktuell auf dem Netzzugang zwischen der ersten Zugangsvorrichtung 13 und der zweiten Zugangsvorrichtung 21 vorliegenden Sicherheitskonfiguration. Die Sicherheitsdatenstruktur 50 kann weiterhin Informationen in Form von Sicherheitsparametern zu weiteren Abschnitten der Zugangsverbindung 60 zwischen der zweiten Zugangsvorrichtung 21 und weiteren Netzwerkkomponenten des Zugangsnetzes 20 sowie zu Verbindungsabschnitten zwischen dem Zugangsnetz 20 und der Dienstdomäne 40 umfassen.

Die erste Zugangsvorrichtung 13 kennt die Sicherheitsparameter und damit die Sicherheitskonfiguration einer aktuell vorliegenden Zugangsverbindung 16. Die erste Zugangsvorrichtung 13 umfasst auch eine Sicherheitsrichtlinie, die Mindestanforderungen an eine Zugangsverbindung 16 festlegt. Eine Sicherheitskonfiguration wird von der ersten Zugangsvorrichtung 13 gegenüber der Sicherheitsrichtlinie überprüft.

Erfüllt die Sicherheitskonfiguration nicht die Mindestanforderung, so wird keine Sicherheitsdatenstruktur 50 in der ersten Zugangsvorrichtung 13 erstellt. In diesem Fall kann beispielsweise ein Schaltsignal von der ersten Zugangsvorrichtung 13 an die Übergangsvorrichtung 14 übermittelt werden, sodass diese eine Verbindung 23 von einem Gerät 11, 12 ins Zugangsnetzwerk 20 blockiert und nicht an das Zugangsnetz 20 weitergeleitet wird.

Erfüllt die Sicherheitskonfiguration die Mindestanforderung erstellt die erste Zugangsvorrichtung 13 eine Sicherheitsdatenstruktur 50. Im Verfahrensschritt S1 wird eine solche Sicherheitsdatenstruktur 50 an die Übergangsvorrichtung 14 übermittelt. Abhängig von der Überprüfung der Sicherheitsdatenstruktur 50 in der Überwachungsvorrichtung 14 kann beispielsweise ein VPN-Tunnel aufgebaut werden oder aber die Verbindung ohne weitere Sicherheitsmaßnahmen über die Funkübertragungsstrecke 23 weitergeleitet werden.

Des Weiteren kann eine Filterrichtlinie in der Übergangsvorrichtung 14 abhängig von der Sicherheitsdatenstruktur 50 ausgewählt werden. Die Filterrichtlinie 14 kann beispielsweise abhängig von einer in der Sicherheitsdatenstruktur 50 angegebenen Übertragungstechnik auf der Funkübertagungsstrecke 23 ausgewählt werden. Neben einem Zugangsnetz entsprechend einem Mobilfunkstandard kann das Zugangsnetz 20 auch ein öffentliches schnurloses lokales Gebietsnetz WLAN oder ein privates WLAN-Netzwerk oder auch ein drahtloses Netzwerk gemäß dem als WiMAX bezeichneten IEEE-Standard 802.16 (WLAN = IEEE Standards 802.11) sein. So kann beispielsweise ein VPN-Tunnel aufgebaut werden, wenn für die Zugangsverbindung 60 beziehungsweise die Funkübertragungstrecke 23 ein GSM-Standard verwendet wird. Bei Verwendung des UMTS- oder 3G-Standards wird ein schwaches Verschlüsselungsverfahren verwendet, bei einer Zugangsverbindung 60 gemäß einem LTE- oder 5G-Standard wird keine Nutzdatenverschlüsselung aktiviert.

Die Sicherheitsdatenstruktur 50 kann von der ersten Übergangsvorrichtung 13 an ein Gerät, hier beispielsweise ein Gerät 11, übermittelt werden, siehe S2. Insbesondere kann die Sicherheitsdatenstruktur 50 an ein Anwendungsprogramm im Gerät bereitgestellt werden. Dadurch kann das Gerät 11 abhängig von der aktuellen Sicherheitsdatenstruktur 50, seine Steuerungsfunktionalität anpassen. Das Gerät 11, kann beispielsweise auf einen autonomen Betriebsmodus zurückfallen, wenn die Sicherheitsdatenstruktur 50 keine ausreichende Sicherheitskonfiguration auf der Zugangsverbindung zur Dienstdomäne 40 aufweist. Eine erste Zugangsvorrichtung 13 kann auch in ein Gerät 11 integriert ausgebildet sein und somit die Erstellung der Sicherheitsdatenstruktur 50 und deren Auswertung umfassen.

Die aktuelle Sicherheitsdatenstruktur 50 wird ebenfalls an einen Dienstserver 41, 42 in der Dienstdomäne 40 übermittelt, siehe S3. Dadurch kann ein vom Zugangsnetzwerk 20 unabhängiger Dienstserver auf die Sicherheitskonfiguration der Zugangsverbindung 60 reagieren.

Die aktuelle Sicherheitsdatenstruktur 50 wird ebenfalls an ein Heimatnetz des Geräts 11, 12, insbesondere in eine Heimatregister zur Dienstüberwachung, übermittelt. Diese Option ist nicht in Figur 1 dargestellt.

Die beschriebenen Varianten der Übermittlung S1, S2, S3 der Sicherheitsdatenstruktur können alleine aber auch kombiniert im System ausgeführt werden.

Die Geräte 11, 12 und Zugangs- bzw. Übergangsvorrichtungen 13, 14 des ersten Netzwerks 10 können als separate Geräte bzw. Vorrichtungen vorliegen. Ebenso ist es möglich, einzelne oder mehrere der Geräte und/oder Vorrichtungen in ein Gerät bzw. eine Vorrichtung zu integrieren. Beispielsweise kann ein industrielles Internet-of-Things-Gerät intern mehrere Komponenten aufweisen, z.B. eine erste Zugangsvorrichtung 13, insbesondere ein Mobilfunkmodem, eine Steuereinheit 15 und eine Übergangsvorrichtung 14. Das integrierte Mobilfunkmodem des Internet-of-Things-Gerätes kann eine erfindungsgemäße Sicherheitsdatenstruktur 50 der Steuereinheit 15 und/oder der Übergangsvorrichtung 14 des Internet-of-Things-Gerätes bereitstellen. Darauf kann die Steuereinheit 15 abhängig von der bereitgestellten Sicherheitsdatenstruktur 50 einen Betriebsmodus freigeben oder sperren, oder die Übergangsvorrichtung 14 kann abhängig von der bereitgestellten Sicherheitsdatenstruktur 50 eine Datenübertragung sperren oder einschränken. Die Komponenten des Internet-of-Things-Gerätes können z.B. über ein SPI-Netzwerk, über ein USB-Netzwerk o.ä. innerhalb des Internet-of-Things-Gerätes verbunden sein.

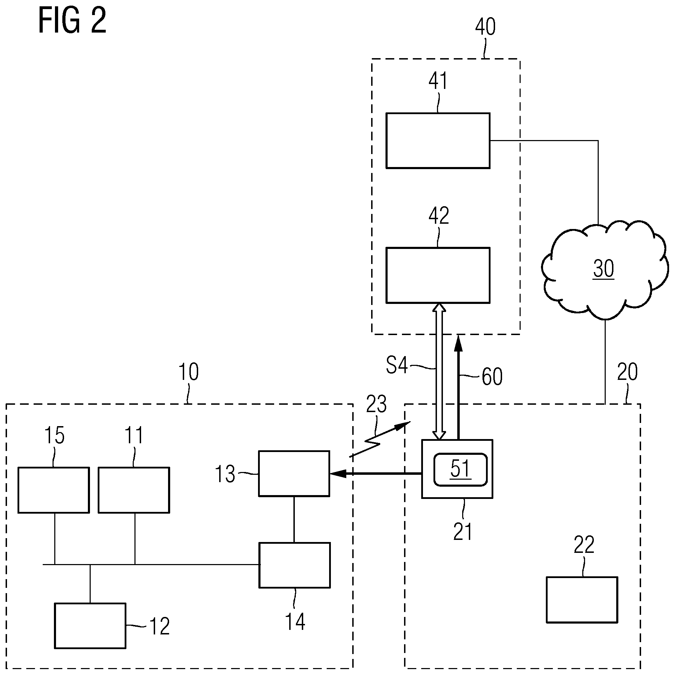

Figur 2 zeigt ein System entsprechend dem System in Figur 1, wobei nun jedoch die Sicherheitsdatenstruktur 51 in der zweiten Zugangsvorrichtung 21 im Zugangsnetzwerk 20 ermittelt wird. Die Sicherheitsdatenstruktur 51 wird an einen Edge-Diensteserver 42 übermittelt, siehe S4 in Figur 2. Der Diensteserver 42 ist direkt, also ohne weiteres öffentliches Netz 30, mit dem Zugangsnetzwerk 20 verbunden oder im Zugangsnetzwerk 20 angeordnet. Abhängig von der Sicherheitsdatenstruktur 51 kann beispielsweise eine Steuerungsfunktionalität durch einen Dienst auf dem Diensteserver 42 gesperrt werden.

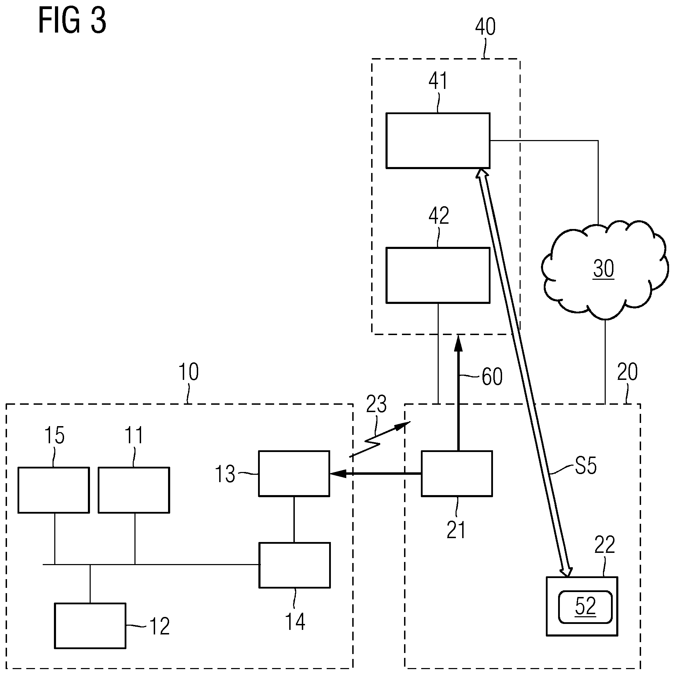

Figur 3 zeigt ein System entsprechend des Systems in Figur 1 und 2. Die Sicherheitsdatenstruktur 52 wird nun aber von einer Netzvorrichtung 22 innerhalb des Zugangsnetzwerks 20 erstellt und zur Auswertung an einen Dienstserver 41, 42 zur Auswertung übermittelt. Die Sicherheitsdatenstruktur 52 umfasst dabei Sicherheitsparameter, die beispielsweise anzeigen, ob Nutzdaten im Zugangsnetzwerk 20 verschlüsselt übertragen werden.

In allen dargestellten Varianten wird die Sicherheitsdatenstruktur 50, 51, 52 gegenüber einer Sicherheitsrichtlinie überprüft, die eine Mindestanforderung der Dienstesrver 41, 42 oder des ersten Netzwerks 10 zur Verschlüsselung der Netzzugangsverbindung 60 vorgibt. Eine Maßnahme im ersten Netzwerk 10 oder im Dienstserver 41, 42 wird abhängig von einem einzelnen Sicherheitsparameter oder einer Kombination mehrerer Sicherheitsparameter der Sicherheitsdatenstruktur 50, 51, 52 veranlasst. Eine Auswertung der Sicherheitsdatenstruktur 50, 51, 52 wird bei einem Aufbau einer Zugangsverbindung 60, bei einer Übergabe der Funkübertragungsstrecke 23 einer Zugangsverbindung 60 zwischen zwei unterschiedlichen ersten Zugangsvorrichtungen 21, in zeitlich vorbestimmten Abständen oder basierend auf Änderungen der Sicherheitsdatenstruktur 50, 51, 52 in einer ersten Zugangsvorrichtung 13 des ersten Netzwerks 10 oder einer zweiten Zugangsvorrichtung 21 oder einer Netzvorrichtung 22 im Zugangsnetz 20 durchgeführt.

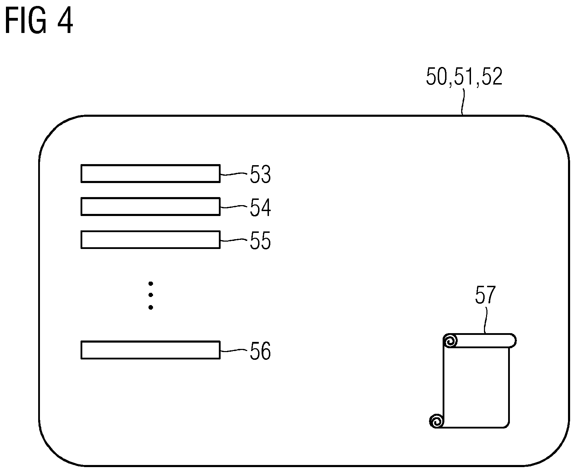

Abbildung 4 zeigt ein Beispiel für eine Sicherheitsdatenstruktur 50, 51, 52. Die Sicherheitsdatenstruktur 50, 51, 52 weist mindestens einen Sicherheitsparameter 53, ..., 56 auf. Die Sicherheitsdatenstruktur 50, 51, 52 kann abhängig von der Vorrichtung, in der sie erstellt wird, einen unterschiedlichen Satz an Sicherheitsparametern 53, ..., 56 umfassen. Die Sicherheitsparameter 53, ..., 56 sowie optional auch weitere enthaltene Information werden durch ein kryptographisches Bestätigungselement 57 bestätigt. Das kryptographische Bestätigungselement 57 kann beispielsweise als eine kryptographische Prüfsumme, beispielsweise eine kryptographische Nachrichtenauthentisierungsnachricht oder eine digitale Signatur ausgebildet sein.

Als ein Sicherheitsparameter 53, ..., 56 kann die Sicherheitsdatenstruktur 50, 51, 52 eine Angabe zu einem Geräts 11, 12, oder einer diesem Gerät 11, 12 zugeordneten Person oder Funktion sein, auf die sich die Sicherheitsdatenstruktur 50, 51, 52 bezieht, enthalten. Eine solche Angabe ist beispielsweise eine Kennung eines Teilnehmers des Zugangsnetzes 20, beispielsweise eine internationale mobile Teilnehmeridentität IMSI, eine Geräte-Kennung IMEI oder eine Netzwerkzugangsidentität NAI sein. Ein oder mehrere Sicherheitsparameter 53, ..., 56 können beispielsweise die verwendete Zugangstechnologie des Zugangsnetzwerks 20 kennzeichnen, das heißt beispielsweise die Art des verwendeten Mobilfunkstandards, ein Frequenzband oder auch ein verwendetes Modulationsverfahren. Ein Sicherheitsparameter 53, ..., 56 kann das verwendete Sicherheitsprotokoll, beispielsweise MACsec, IPsec, IPoverTLS beziehungsweise die Netzwerkschicht gemäß dem OSI-Referenzmodell des verwendeten Sicherheitsprotokolls sein.

### Sicherheitsparameter können des Weiteren enthalten:

Angaben zu geschützten Teilstrecken der Netzzugangsverbindung 60, beispielsweise dass lediglich der drahtlose Zugang von der ersten Zugangsvorrichtung 13 bis zu einer Basisstation des Zugangsnetzwerks oder ein Ende-zu-Ende-Schutz von der ersten Zugangsvorrichtung 13 bis zu einem Diensteserver 42 vorliegt.

Angaben der Organisation oder Firma, welche die kryptographische Schlüssel ausgegeben hat. Dadurch kann beispielsweise unterschieden werden, ob ein kryptographischer Schlüssel von einem Betreiber des ersten Netzwerks 10 oder von einem Betreiber des Zugangsnetzwerks 20 kontrolliert wird.

Sicherheitsoptionen wie beispielsweise aktive Sicherheitsoptionen auf der Funkübertragungsstrecke 23, die beispielsweise einen Status einer Verschlüsselung oder eines Integritätsschutz angeben.

Ebenfalls kann die verwendete Cipher Suite, das heißt der verwendete kryptographische Algorithmus und Modus, in einem Sicherheitsparameter 53, ..., 56 enthalten sein. Des Weiteren kann das verwendete Authentisierungs- und Schlüsselvereinbarungsprotokoll, die verwendete Protokollversion, Schlüsselaktualisierungsintervalle oder auch ein Widerrufungsstatus der verwendeten Schlüssel i, einem Sicherheitsparameter 53, ..., 56 angegeben sein. Weiterhin können ausgehandelte Protokolloptionen, wie z.B. Datenkompressionsmethode, Unterstützung für Session Resumption, verwendete TLS-Extensions, angegeben werden.

Ein Sicherheitsparameter 50, ..., 56 kann des Weiteren eine Länge eines Sitzungsschlüssels angeben. Dabei kann beispielsweise eine effektive Länge des Sitzungsschlüssels angegeben sein. Des Weiteren kann die Länge des verwendeten Authentisierungsschlüssels enthalten sein. In einem Sicherheitsparameter 53, ..., 56 kann ein Sicherheitslevel der gesamten Zugangsverbindung 60 für eine vereinfachte Auswertung oder die einzelnen Sicherheitslevel auf unterschiedlichen Abschnitten der Zugangsverbindung angegeben werden.

Des Weiteren kann ein Zeitstempel, auf den sich die Sicherheitsdatenstruktur 50 bezieht, eine Gültigkeitsdauer der Sicherheitsdatenstruktur oder auch eine Adressinformation enthalten sein, über die eine aktualisierte Statusinformation abrufbar ist. Diese kann den aktuellen Zustand betreffen oder eine Information über einen gewissen zurückliegenden Zeitraum bestätigen. Des Weiteren können in den Sicherheitsparametern Angaben zur Qualität der Zugangsverbindung wie beispielsweise die unterstützte Bandbreite, Laufzeitverzögerungen oder Schwankungen (Delay, Jitter) angegeben sein. Als weitere Parameter können eine Slice-ID eines 5G-Netzwerks, Angaben zum Namen der ersten oder zweiten Netzzugangsvorrichtung 13, 21 enthalten sein.

Somit kann eine im Zugangsnetzwerk 20 grundsätzlich vorhandene Sicherheit verlässlich für ein erstes Netzwerk 10 beziehungsweise Anwendungen im ersten Netzwerk 10 verwendet werden. Es ist durch einen dritten Knoten, das heißt einem Knoten, der nicht selbst an der Umsetzung der Sicherheitsmechanismen beteiligt ist, überprüft werden, ob eine Mindestsicherheitsvariante für ein bestimmtes erste Netzwerkumgebung tatsächlich verwendet wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Bereitstellung von Sicherheitskonfigurationsdaten einer Zugangsverbindung, die über ein Zugangsnetzwerk (20) zwischen einem ersten Netzwerk (10) und einem Dienstserver (41, 42) eingerichtet ist, wobei eine Sicherheitsdatenstruktur (50) bereitgestellt wird, die eine aktuell verwendete Sicherheitskonfiguration der Zugangsverbindung (60) umfasst und die Sicherheitskonfiguration kryptographisch geschützt bestätigt und
abhängig von der Sicherheitsdatenstruktur (50) eine Maßnahme im ersten Netzwerk (10) und/oder im Dienstserver (41, 42) veranlasst wird.

2. Verfahren nach Anspruch 1, wobei die Sicherheitsdatenstruktur (50) von einer ersten Zugangsvorrichtung (13) im ersten Netzwerk (10) erstellt wird.

3. Verfahren nach Anspruch 2, wobei die Sicherheitsdatenstruktur (50) an eine Übergangsvorrichtung (14) im ersten Netzwerk (10) übermittelt wird (S1), und abhängig von der Sicherheitsdatenstruktur (50) ein Aufbau einer Zugangsverbindung (60) durchgeführt wird.

4. Verfahren nach Anspruch 2, wobei die Sicherheitsdatenstruktur (50) einem Gerät (11, 12), insbesondere einer Anwendung auf dem Gerät (11, 12), im ersten Netzwerk (10) zur Auswertung übermittelt wird (S2) und abhängig von der Auswertung der Sicherheitsdatenstruktur (50) eine Anpassung mindestens einer Funktion des Gerätes (11) durchgeführt wird.

5. Verfahren nach einem der Ansprüche 2, wobei die Sicherheitsdatenstruktur (50) zur Auswertung an einen Dienstserver (41, 42) übermittelt wird (S3).

6. Verfahren nach Anspruch 1, wobei die Sicherheitsdatenstruktur (51) von einer zweiten Zugangsvorrichtung (13), die dem Zugangsnetzwerk (20) angehört, erstellt wird und zur Auswertung an einen Dienstserver (41, 42) übermittelt wird (S4).

7. Verfahren nach Anspruch 1, wobei die Sicherheitsdatenstruktur (52) von einer Netzvorrichtung (22) innerhalb des Zugangsnetzwerks (20) erstellt wird und zur Auswertung an einen Dienstserver(41, 42) übermittelt wird (S5).

8. Verfahren nach einem der vorhergehenden Ansprüche, wobei die Sicherheitsdatenstruktur (50, 51, 52) gegenüber einer Sicherheitsrichtlinie, die eine Mindestanforderung des ersten Netzwerks (10) zur Verschlüsselung der Zugangsverbindung (60) vorgibt, überprüft wird.

9. Verfahren nach einem der vorhergehenden Ansprüche, wobei die Sicherheitsdatenstruktur (50, 51, 52) gegenüber einer Sicherheitsrichtlinie, die eine Mindestanforderung der Dienstserver (41,42) zur Verschlüsselung der Zugangsverbindung (60) vorgibt, überprüft wird.

10. Verfahren nach einem der vorhergehenden Ansprüche, wobei eine Maßnahme im ersten Netzwerk (10) und/oder im Dienstserver (41, 42) abhängig von einem einzelnen Sicherheitsparameter (53, .., 56) oder einer Kombination mehreren Sicherheitsparametern (53, .., 56) der Sicherheitsdatenstruktur (50, 51, 52) veranlasst wird.

11. Verfahren nach einem der vorhergehenden Ansprüche, wobei eine Auswertung der Sicherheitsdatenstruktur (50) bei einem Aufbau einer Zugangsverbindung (60), bei einer Übergabe einer Zugangsverbindung (60) zwischen zwei unterschiedlichen zweiten Zugangsvorrichtungen (13) (Handover), bei einer Übergabe einer Zugangsverbindung zwischen zwei unterschiedlichen ersten Zugangsverbindung, in zeitlich vorbestimmten Abständen oder basierend auf Änderungen der Sicherheitsinformation in einer ersten Zugangsvorrichtung (13) des ersten Netzwerks (10) oder einer zweiten Zugangsvorrichtung (21) des Zugangsnetzwerkes (20) durchgeführt wird.

12. Verfahren nach einem der vorhergehenden Ansprüche, wobei das erste Netzwerk (10) ein Internet of Things, insbesondere ein Datennetzwerk einer Industrieanlage ist, in dem Geräte eigenständig über das erste Netzwerk (10) miteinander kommunizieren.

13. Verfahren nach einem der vorhergehenden Ansprüche, wobei das Zugangsnetz (20) ein drahtgebundenes Netzwerk oder ein drahtloses Netzwerk, insbesondere ein Mobilfunknetzwerk gemäß einem GSM, UMTS, LTE oder 5G Standard eines 3G Partnerschaftsprojekts, ist.

14. Sicherheitsdatenstruktur (50, 51, 52) zur Bereitstellung von Sicherheitskonfigurationsdaten einer Zugangsverbindung (60), die innerhalb eines Zugangsnetzwerks (20) zwischen einem ersten Netzwerk (10) und einem Dienstserver (41, 42) eingerichtet ist, umfassend mindestens einen Sicherheitsparameter (53,..,56) einer aktuell verwendeten Sicherheitskonfiguration einer Zugangsverbindung (60), und ein kryptographisches Bestätigungselement (57), das abhängig von dem mindestens einen Sicherheitsparameter (53,..,56) ermittelt ist.

15. Sicherheitsdatenstruktur (50, 51, 52) nach Anspruch 14, wobei der mindestens eine Sicherheitsparameter (53,..,56) eine Sicherheitsinformation zu einer Verbindung innerhalb des Zugangsnetzwerks (20) enthält.

16. Sicherheitsdatenstruktur (50, 51, 52) nach Anspruch 14 oder 15, wobei die Sicherheitsdatenstruktur (50, 51, 52) in Form einer Erweiterbaren Auszeichnungssprache (Extensible Markup Language XML) oder in Form einer JavaScript Object Notation JSON kodiert ist.

17. System zur Bereitstellung von Sicherheitskonfigurationsdaten einer Zugangsverbindung (60), die innerhalb eines Zugangsnetzwerks (20) zwischen einem ersten Netzwerk (10) und einem Dienstserver (41, 42) eingerichtet ist, umfassend ein erstes Netzwerk (10), ein Zugangsnetzwerks (20) und mindestens einen Dienstserver (41, 42), wobei das erste Netzwerk (10) und/oder das Zugangsnetzwerk (20) derart ausgebildet sind eine Sicherheitsdatenstruktur (50, 51, 52) bereitzustellen, die eine aktuell verwendete Sicherheitskonfiguration der Zugangsverbindung (60) umfasst und die Sicherheitskonfiguration kryptographisch geschützt bestätigt und
abhängig von der Sicherheitsdatenstruktur (50, 51, 52) eine Maßnahme im ersten Netzwerk (10) und/oder im Dienstserver (41, 42) zu veranlassen.

18. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
